# EUROPEAN PATENT APPLICATION

(11) **EP 4 621 863 A1**
(43) Date of publication of application: **24.09.2025**
(21) Application number: 25163285.7
(22) Date of filing: 12.03.2025
(51) Int. Cl.: H01M 4/13, H01M 4/139, H01M 10/052, H01M 10/0562

(54) **SOLID ELECTROLYTE, MANUFACTURING METHOD THEREOF AND SOLID-STATE BATTERY**

(30) Priority: 22.03.2024 KR 20240039575
(71) Applicant: Seoul National University R&DB Foundation, Seoul 08826 (KR)
(72) Inventor: KANG, Kisuk, Seoul 08826 (KR); KIM, Wonju, Seoul 08826 (KR)
(74) Representative: Gille Hrabal Partnerschaftsgesellschaft mbB Patentanwälte

(57) **Abstract**

Provided is a solid electrolyte having high ion conductivity. According to an aspect, provided is a solid electrolyte represented by General Formula 1 below.

[General Formula 1] LiₐM_{b}X₃O_{c}

In General Formula 1 above, M is a metal element having an oxidation number of +3, X is a halogen element, and 0<a≤2, 0<b≤1, and 0<c≤2.

## Description

### CROSS-REFERENCE TO RELATED APPLICATION

This application claims priority to Korean Patent Application No. 10-2024-0039575 filed on March 22, 2024, and all the benefits accruing therefrom under 35 U.S.C. §119, the contents of which are incorporated by reference in their entirety.

### BACKGROUND

The present disclosure relates to a solid electrolyte, a method for preparing the same, and an all-solid-state battery.

Recently, fields of industries in which lithium secondary batteries are required have expanded from small-sized power sources for mobile devices to medium-and-large-sized power sources for electric vehicles and energy storage devices. Particularly, interest in electric vehicles, which are eco-friendly vehicles, is increasing sharply, and major automobile companies around the world are accelerating the development of electric vehicles as a next-generation growth technology with the motto of eco-friendliness. Unlike small-sized lithium secondary batteries, such medium-and-large-sized lithium secondary batteries are not only operated in harsh environments (e.g., temperature and impact), but also include a large number of batteries, and thus, are required to secure safety. Accordingly, as the application range of the fields of industries in which lithium secondary batteries are required have expanded to large-sized batteries, interest in the safety issue of lithium secondary batteries is also increasing significantly.

A typical lithium secondary battery uses an organic liquid electrolyte, and thus, has problems such as low thermal stability, ignitability, and leakage. In fact, explosion accidents of products to which the typical lithium secondary battery is applied are continuously reported, so that it is urgent to address the problems. Accordingly, as a solution, an all-solid-state battery using a solid electrolyte is emerging as an alternative. In order to express the performance of the all-solid-state battery, it is required that contact properties between the solid electrolyte, on which the all-solid-state battery is based, and an electrode are excellent.

Research has been actively underway on the development of solid electrolytes and the implementation of all-solid-state batteries, and solid electrolytes, which can be broadly divided into three types, sulfide-based, oxide-based, and chloride-based solid electrolytes according to the type of anions, are being developed. Although such various types of solid electrolytes have been developed, each of the solid electrolytes has limitations in implementing an ideal solid-state battery due to different problems thereof. Particularly, the oxide-based solid electrolyte has high electrochemical stability, but has difficulty in easily creating an interfacial contact with an electrode, and the sulfide-based solid electrolyte has low oxidation and reduction stability, so that a coating layer is required to be introduced.

The chloride-based solid electrolyte, which has been developed relatively recently, shows high oxidation stability, but uses an expensive precursor and shows low reduction stability, thereby having a fatal weakness in that the introduction of double solid electrolytes is essential in the preparation of an all-solid-state battery. Due to the above-described limitations of each solid electrolyte, the industry market is paying attention to the sulfide-based solid electrolyte capable of being charged and discharged relatively stably if a coating layer is introduced. However, there is a problem of an increase in cost due to an additional step of introducing a coating layer, and in order to substantially replace a liquid electrolyte-based lithium battery, it is required to develop a solid electrolyte which is more economical and has more stable performance.

### SUMMARY

The present disclosure provides a solid electrolyte having high ion conductivity.

The present disclosure also provides a solid electrolyte having high oxidation stability and reduction stability.

The present disclosure also provides a method for preparing the solid electrolyte.

The present disclosure also provides an all-solid-state battery capable of being charged and discharged stably even with a non-coated positive electrode.

The present disclosure also provides an all-solid-state battery having excellent lifespan properties and electrochemical stability.

The purposes of the present invention are not limited to the purposes mentioned above, and other purposes and advantages of the present invention not mentioned can be understood by the following description, and will be more clearly understood by embodiments of the present invention. In addition, it can be easily seen that the purposes and advantages of the present invention may be implemented by means and combinations thereof described herein.

In accordance with a first exemplary embodiment of the present invention, there is provided a solid electrolyte represented by General Formula 1 below.

[General Formula 1] LiₐM_{b}X₃O_{c}

In General Formula 1 above, M is a metal element having an oxidation number of +3, X is a halogen element, and 0<a≤2, 0<b≤1, and 0<c≤2.

In accordance with a second exemplary embodiment of the present invention, in the first aspect above, in General Formula 1 above, M may be one selected from the group consisting of Al, Ga, Y, La, and Ac.

In accordance with a third exemplary embodiment of the present invention, in the first or second aspect above, in General Formula 1 above, M may include Al.

In accordance with a fourth exemplary embodiment of the present invention, in one of the first to third aspects above, in General Formula 1 above, the halogen element may be F, Cl, or Br.

In accordance with a fifth exemplary embodiment of the present invention, in one of the first to fourth aspects above, in General Formula 1 above, it may be that a and c are the same, or a=2c.

In accordance with a sixth exemplary embodiment of the present invention, there is provided a method for preparing a solid electrolyte, the method including (S1) mixing and reacting lithium oxide and MX₃ to synthesize a solid electrolyte represented by General Formula 1 below.

[General Formula 1] LiₐM_{b}X₃O_{c}

In General Formula 1 above, M is a metal element having an oxidation number of +3, X is a halogen element, and 0<a≤2, 0<b≤1, and 0<c≤2.

In accordance with a seventh exemplary embodiment of the present invention, in the sixth aspect above, the reaction may be performed in an organic solvent or by solid-phase mixing.

In accordance with an eighth exemplary embodiment of the present invention, in the sixth or seventh aspect above, the mixing may be performed at 400 rpm to 600 rpm for more than 0 hour to 72 hours or less.

In accordance with a ninth exemplary embodiment of the present invention, there is provided an all-solid-state battery including a solid electrolyte according to any one of the first to fifth aspects above interposed between the positive electrode and the negative electrode. For example, the above-described solid electrolyte may be prepared by a preparation method according to at least one of the sixth to eighth aspects above.

In accordance with a tenth exemplary embodiment of the present invention, in the ninth aspect above, the solid electrolyte may include a first layer in contact with the positive electrode, and a second layer in contact with the negative electrode, wherein at least one of the first layer and the second layer may include the solid electrolyte.

The above means for achieving the purposes do not include all the features of the present invention. Various features of the present invention and advantages and effects in accordance thereto may be understood in more detail with reference to the following specific description.

### BRIEF DESCRIPTION OF THE DRAWINGS

Exemplary embodiments can be understood in more detail from the following description taken in conjunction with the accompanying drawings, in which:
FIG. 1A is a cross-sectional view of an all-solid-state battery in accordance with an exemplary embodiment of the present invention;
FIG. 1B is a cross-sectional view of an all-solid-state battery according to another embodiment of the present invention;
FIG. 2 shows results of X-ray diffraction (XRD) analysis of LiOH, Li₂O, and solid electrolytes according to Examples 1 to 10;
FIG. 3 is a graph showing a discharge capacity according to the number of cycles of each all-solid-state battery according to Preparation Examples 3 and 4;
FIG. 4A is a graph showing a current according to a change in the voltage applied to an electrolyte of Example 5;
FIG. 4B shows a cyclic voltammetry graph of Li₂ZrCl₆ (Ref);
FIG. 4C shows an oxidation current according to a voltage applied when the number of cycles of an all-solid-state battery according to Example 5-2 is changed;
FIG. 4D shows a reduction current according to a voltage applied when the number of cycles of the all-solid-state battery according to Example 5-2 is changed;
FIG. 5 is a charge/discharge graph according to a change in the number of cycles of an all-solid-state battery according to Preparation Example 3; and
FIG. 6 is a charge/discharge graph according to a change in the number of cycles of an all-solid-state battery according to Preparation Example 4.

### DETAILED DESCRIPTION OF EMBODIMENTS

In the present specification, singular expressions include plural expressions unless the context clearly indicates otherwise.

In the present specification, the terms "comprise" and/or "comprising" specify the presence of stated shapes, steps, numbers, operations, members, elements and/or groups thereof, and do not preclude the presence or addition of one or more other shapes, steps, numbers, operations, members, elements and/or groups thereof.

In the present specification, "at least one of a, b and c" may include a, b and c alone or a combination of two or more selected from the group consisting of a, b and c.

In the present specification, if several embodiments are described, each embodiment may be combined unless specifically stated otherwise. In this case, an effect of the present invention may be defined as including an effect derived from each embodiment and an effect derived from an organic combination of each embodiment. For example, even if embodiments 1 and 2 are independently described in the present specification, unless the context clearly indicates otherwise, the embodiments 1 and 2 may be organically combined with each other, and an effect of the present invention may include an effect derived from the combination of the embodiments 1 and 2.

In the present specification, the range of numerical values expressed using the term 'to' indicates the range of numerical values including values described before and after the term as lower and upper limit values, respectively. If a plurality of numerical values are described as an upper limit and a lower limit of an arbitrary numerical range, respectively, the numerical range described in the present specification may be understood as an arbitrary numerical range having any one value among a plurality of lower limit values and any one value among a plurality of upper limit values as a lower limit value and an upper limit value, respectively. For example, if a to b, or c to d is described in the specification, it may be understood that equal to or higher than a to equal to or lower than b, equal to or higher than a to equal to or lower than d, equal to or higher than c to equal to or lower than d, or equal to or higher than c to equal to or lower than b is described.

In the present specification, a term such as "about" or "substantially" refers to a reasonable amount of deviation of a term modified such that a final result does not significantly change. These terms may be interpreted as including a deviation of at least ±5% or at least ±10% within a limit in which the deviation does not modify and invalidate the meaning of a word.

According to an aspect of the present invention, there is provided a solid electrolyte represented by General Formula 1 below.

[General Formula 1] LiₐM_{b}X₃O_{c}

In General Formula 1 above, M is a metal element having an oxidation number of +3, X is a halogen element, and 0<a≤2, 0<b≤1, and 0<c≤2.

According to an aspect of the present invention, a solid electrolyte exhibiting high oxidation stability and high reduction stability may be implemented by including a halogen element and an oxygen element in the solid electrolyte.

Hereinafter, the configuration of the present invention will be described in more detail.

### 1. Solid electrolyte

According to an aspect of the present invention, there is provided a solid electrolyte represented by General Formula 1 below.

[General Formula 1] LiₐM_{b}X₃O_{c}

In General Formula 1 above, M is a metal element having an oxidation number of +3, X is a halogen element, and 0<a≤2, 0<b≤1, and 0<c≤2.

Specifically, in General Formula 1 above, a and c may each independently be 1 to 1.2. In General Formula 1 above, if a and c are each independently 1 to 1.2, an effect of further increasing the ion conductivity of the solid electrolyte may be implemented.

Specifically, in General Formula 1 above, M may be one selected from the group consisting of Al, Ga, Y, La, and Ac, and more specifically, may include Al. If M is Al, it has excellent economic feasibility compared to other metal elements, and if used together with O (oxygen) anions, a synergistic effect in electrochemical stability may be obtained.

Specifically, in General Formula 1 above, the halogen element may be F, Cl, or Br, and specifically, may be Cl. Here, if the halogen element is Cl, an effect of further increasing the ion conductivity may be implemented compared to F, and an effect of allowing less decomposition into a halogen gas may be implemented compared to Br. Accordingly, if the halogen element is Cl, higher oxidation stability may be implemented.

In some embodiments of the present invention, in General Formula 1 above, it may be that a and c are the same, or a=2c. According to some embodiments of the present invention, since a and c are controlled to be the same as each other in General Formula 1 above, a solid electrolyte implementing high ion conductivity, and having high oxidation stability and reduction stability may be implemented, and at the same time, an all-solid-state battery having excellent lifespan properties and electrochemical stability may be implemented.

In some examples, the solid electrolyte may be Li_{0.6}AlCl₃O_{0.6}, Li_{0.8}AlCl₃O_{0.8}, Li_{0.9}AlCl₃O_{0.9}, LiAlCl₃O, Li_{1.1}AlCl₃O_{1.1}, Li_{1.2}AlCl₃O_{1.2}, Li_{1.3}AlCl₃O_{1.3}, Li_{1.4}AlCl₃O_{1.4}, Li_{1.5}AlCl₃O_{1.5}, or Li_{1.6}AlCl₃O_{1.6}.

In some embodiments of the present invention, the content of an amorphous phase based on the total phase of the solid electrolyte may be 50% to 85%. The content of the amorphous phase may be measured by a method of refinement using an internal standard material by using an XRD analysis method. According to some embodiments of the present invention, if the content of the amorphous phase satisfies the above-described numerical range, a synergistic effect of further increasing the ion conductivity of the solid electrolyte may be implemented.

### 2. Method for preparing solid electrolyte

According to another aspect of the present invention, there is provided a method for preparing a solid electrolyte, the method including (S1) mixing and reacting lithium oxide and MX₃ to synthesize a solid electrolyte represented by General Formula 1 below.

[General Formula 1] LiₐM_{b}X₃O_{c}

In General Formula 1 above, M is a metal element having an oxidation number of +3, X is a halogen element, and 0<a≤2, 0<b≤1, and 0<c≤2.

Specifically, the lithium oxide may include Li₂O₂. According to some embodiments of the present invention, since the lithium oxide includes Li₂O₂, the ion conductivity of the solid electrolyte may be implemented further higher, and at the same time, the oxidation stability and reduction stability thereof may be further improved.

In some embodiments of the present invention, the mixing may be performed at 400 rpm to 600 rpm, 450 rpm to 600 rpm, 500 rpm to 600 rpm, 550 rpm to 600 rpm, or 580 rpm to 600 rpm for more than 0 hour to 72 hours or less, 10 hours to 60 hours, 20 hours to 50 hours, 20 hours to 40 hours, 20 hours to 30 hours, 20 hours to 25 hours, 21 hours to 24 hours, 22 hours to 24 hours, or 23 hours to 24 hours. Specifically, if the mixing rate and the stirring time of the mixing satisfy the above-described numerical ranges, a solid electrolyte having further higher ion conductivity may be implemented.

In some embodiments of the present invention, the molar ratio (lithium oxide:MX₃) of the lithium oxide to the MX₃ may be 0.1:1 to 1:1, 0.2:1 to 1:1, 0.3:1 to 0.9:1, 0.3:1 to 0.8:1, 0.4:1 to 0.75:1, 0.4:1 to 0.7:1, 0.45:1 to 0.65:1, 0.5:1 to 0.65:1, 0.5:1 to 0.6:1, or 0.55:1 to 0.6:1. According to some embodiments of the present invention, if the molar ratio of the lithium oxide to the MX₃ satisfies the above-described numerical range, a synergistic effect on the ion conductivity of the solid electrolyte may be further expressed.

### 3. All-solid-state battery

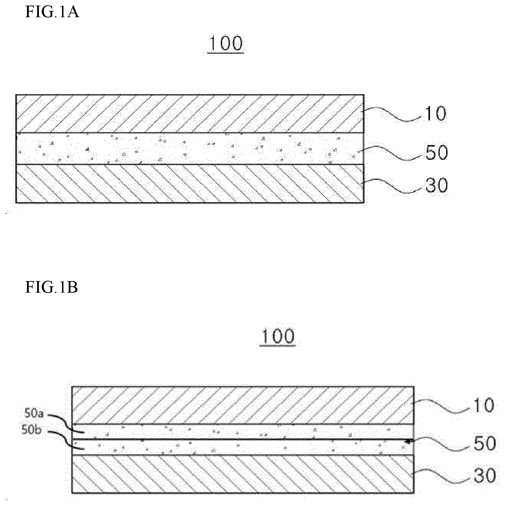

FIG. 1A is a cross-sectional view of an all-solid-state battery in accordance with an exemplary embodiment of the present invention.

FIG. 1B is a cross-sectional view of an all-solid-state battery according to another embodiment of the present invention.

Referring to FIGS. 1A and 1B, an all-solid-state battery 100 of some embodiments of the present invention may include a positive electrode 10, a negative electrode 30, and a solid electrolyte 50 of some embodiments interposed between the positive electrode 10 and the negative electrode 30.

As illustrated in FIG. 1A, the solid electrolyte 50 according to an embodiment of the present invention may have a single composition without distinction between a positive electrode and a negative electrode.

As illustrated in FIG. 1B, the solid electrolyte 50 according to another embodiment of the present invention may include a first layer 50a adjacent to the positive electrode 10 and a second layer 50b adjacent to the negative electrode 30. In some embodiments of the present invention, the solid electrolyte 50 may be included in at least one of the first layer 50a and the second layer 50b.

### Positive electrode

The positive electrode 10 according to the present invention may be a layer containing a positive electrode active material. The positive electrode active material may be a metal oxide including lithium, the metal oxide capable of electrochemically intercalating or deintercalating lithium by an oxidation-reduction reaction.

In some embodiments of the present invention, the positive electrode 10 may be a non-coated positive electrode material without a coating layer. According to some embodiments of the present invention, since a solid electrolyte having high ion conductivity and excellent oxidation stability and reduction stability is implemented, a coating layer may not be required in a positive electrode.

For example, the positive electrode active material may include a lithium transition metal oxide. The lithium transition metal oxide may be, for example, one more selected from the group consisting of Liₓ₁CoO₂(0.5<x1<1.3), Liₓ₂NiO₂(0.5<x2<1.3), Liₓ₃MnO₂(0.5<x3<1.3), Liₓ₄Mn₂O₄(0.5<x4<1.3), Liₓ₅(Niₐ₁Co_{b1}Mn_{c1})O₂(0.5<x5<1.3, 0<a1<1, 0<b1<1, 0<c1<1, a1+b1+c1=1), Liₓ₆Ni_{1-y1}Co_{y1}O₂(0.5<x6<1.3, 0<y1<1), Liₓ₇Co_{1-y2}Mn_{y2}O₂(0.5<x7<1.3, 0≤2<1), Liₓ₈Ni_{1-y3}Mn_{y3}O₂(0.5<x8<1.3, O≤3<1), Liₓ₉(Niₐ₂Co_{b2}Mn_{c2})O₄(0.5<x9<1.3, 0<a2<2, 0<b2<2, 0<c2<2, a2+b2+c2=2), Liₓ₁₀Mn_{2-z1}Ni_{z1}O₄(0.5<x10<1.3, 0<z1<2), Liₓ₁₁Mn_{2-z2}Co_{z2}O₄(0.5<x11<1.3, 0<z2<2), Liₓ₁₂CoPO₄(0.5<x12<1.3), and Liₓ₁₃FePO₄(0.5<x13<1.3).

In some examples, the positive electrode may further include a conductive material. For example, the conductive material may improve conductivity between positive electrode active material particles or with a positive electrode current collector in the positive electrode, and may prevent a binder from acting as a non-conductor. The conductive material may be, for example, a mixture of one or two or more conductive materials selected from the group consisting of graphite, carbon black, carbon fiber, metal fiber, metal powder, a conductive whisker, a conductive metal oxide, activated carbon and a polyphenylene derivative, and more specifically, may be a mixture of one or two or more conductive materials selected from the group consisting of natural graphite, artificial graphite, Super-p, acetylene black, Ketjen black, channel black, furnace black, lamp black, thermal black, Denka black, aluminum powder, nickel powder, zinc oxide, potassium titanate, and titanium oxide.

In some examples, the positive electrode may further include a binder. For example, the binder may be, for example, poly(vinylidene fluoride *co-*hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyano ethyl pullulan, cyano ethyl poly(vinylalcohol), cyano ethylcellulose, cyano ethylsucrose, pullulan, styrenebutadiene rubber, carboxyl methyl cellulose, or the like, but is not limited thereto.

If necessary, the positive electrode 10 may further include a current collector, and specifically, the current collector may include SUS, aluminum, nickel, iron, titanium, carbon, or the like.

### Negative electrode

The negative electrode 30 according to the present invention may include a negative electrode active material capable of electrochemically intercalating or deintercalating lithium by an oxidation-reduction reaction.

For example, the negative electrode active material may be metal lithium or a LiAl-based, LiaG-based, LiPb-based, LiSi-based, or LiIn-based alloy that is alloyed with lithium. In addition, the negative electrode active material may use a general carbon material such as graphite, non-graphitized carbon in which a resin is calcined-carbonized, graphitized carbon in which cokes are heat-treated, or fullerene, or may use a metal oxide such as TiO₂, or SnO₂ having a potential of less than 2 V for lithium, but is not limited thereto.

In some examples, the negative electrode 30 may further include one or more of a binder and a conductive material. Here, the binder and the conductive material may be the same as or different from the above-described composition.

If necessary, the negative electrode 30 may further include a current collector, and specifically, the current collector may include SUS, aluminum, nickel, iron, titanium, carbon, or the like.

Hereinafter, embodiments of the present invention will be described in detail so that those skilled in the art to which the present invention belongs may easily implement the present invention, but this is merely an example, and the scope of rights of the present invention is not limited by the following contents.

### [Preparation Example 1: Preparation of solid electrolyte]

### <Examples 1 to 11: Solid electrolytes with different molar ratios of Li₂O₂ to AlCl₃>

Mixtures obtained by mixing Li₂O₂ and AlCl₃ at molar ratios described in Table 1 below were crushed at 400 rpm to 600 rpm for more than 0 hour to 72 hours using a high energy ball mill.

**[Table 1]**

| Classification | Rotation rate (rpm) | Stirring time (hour) | Molar ratio of Li₂O₂ to AlCl₃ | Product |
|---|---|---|---|---|
| | | | (Li₂O₂:AlCl₃) | |
| Example 1 | 600 | 24 | 0.3:1 | Li_{0.6}AlCl₃O_{0.6} |
| Example 2 | 600 | 24 | 0.4:1 | Li_{0.8}AlCl₃O_{0.8} |
| Example 3 | 600 | 24 | 0.45:1 | Li_{0.9}AlCl₃O_{0.9} |
| Example 4 | 600 | 24 | 0.5:1 | LiAlCl₃O |
| Example 5 | 600 | 24 | 0.55:1 | Li_{1.1}AlCl₃O_{1.1} |
| Example 6 | 600 | 24 | 0.6:1 | Li_{1.2}AlCl₃O_{1.2} |
| Example 7 | 600 | 24 | 0.65:1 | Li_{1.3}AlCl₃O_{1.3} |
| Example 8 | 600 | 24 | 0.7:1 | Li_{1.4}AlCl₃O_{1.4} |
| Example 9 | 600 | 24 | 0.75:1 | Li_{1.5}AlCl₃O_{1.5} |
| Example 10 | 600 | 24 | 0.8:1 | Li_{1.6}AlCl₃O_{1.6} |

### <Comparative Example 1: Commercial LiAlCl₄>

LiAlCl₄ was synthesized as Comparative Example 1. A mixture obtained by mixing LiCl and AlCl₃ at a molar ratio of 1:1 was crushed at 600 rpm for 24 hours using a high energy ball mill. Alternatively, a mixture obtained by mixing LiCl and AlCl₃ at a molar ratio of 1:1 was heated in a quartz crucible under a vacuum atmosphere at 120 °C for 24 hours to synthesize commercial LiAlCl₄.

### <Comparative Example 2: Synthesis example of LiAlCl_{2.5}O_{0.75}>

LiAlCl_{2.5}O_{0.75} was synthesized through two processes. First, a mixture obtained by mixing LiCl and AlCl₃ at a molar ratio of 1:1 was heated at 180 °C to synthesize LiAlCl₄. Second, a mixture obtained by mixing the synthesized LiAlCl₄ and Sb₂O₃ at a molar ratio of 4:1 was heated at 250 °C for 1 hour or more to remove gaseous SbCl₅, thereby synthesizing LiAlCl_{2.5}O_{0.75}.

### <Comparative Example 3: Synthesis example of LiOH-AlCl₃>

A mixture obtained by mixing LiOH and AlCl₃ at a molar ratio of 1:1 was crushed at 600 rpm for 24 hours using a high energy ball mill.

### <Comparative Example 4: Synthesis example of Li₂O-AlCl₃>

A mixture obtained by mixing Li₂O and AlCl₃ at a molar ratio of 1:1 was crushed at 600 rpm for 72 hours using a high energy ball mill.

### [Experimental Example 1: Ion conductivity of solid electrolyte]

In a glove box under an argon atmosphere, a sample of the solid electrolyte of Preparation Example 1 was weighed and placed in a polyether ether ketone tube (PEEK tube, inner diameter 10 mm, outer diameter 30 mm, and height 20 mm), and inserted from above and below between powder molding jigs containing Stainless Use Steel (SUS). Next, the sample was pressed using a uniaxial press machine (manufactured by Lambda Scientific Co., Ltd.) at 3 ton to mold a pellet having a diameter of 10 mm and an arbitrary thickness. The obtained pellet was placed in a sealed-type electrochemical cell capable of maintaining an argon atmosphere.

**[Table 2]**

| Classification | Molar ratio of Li₂O₂ to AlCl₃ | Chemical Formula | Ion conductivity (S/cm) |
|---|---|---|---|
| | (Li₂O₂:AlCl₃) | | |
| Comparative Example 1 | - | LiAlCl₄ | 1.2*10⁻⁶ |
| Comparative Example 2 | - | LiAlCl_{2.5}O_{0.75} | 1.52*10⁻³ |
| Comparative Example 3 | - | LiAlCl₃OH | 5.3*10⁻⁶ |
| Comparative Example 4 | - | Li₂AlCl₃O | 6.19*10⁻⁵ |
| Example 1 | 0.3:1 | Li_{0.6}AlCl₃O_{0.6} | 3.5*10⁻⁵ |
| Example 2 | 0.4:1 | Li_{0.8}AlCl₃O_{0.8} | 1.62*10⁻⁴ |
| Example 3 | 0.45:1 | Li_{0.9}AlCl₃O_{0.9} | 1.70*10⁻⁴ |
| Example 4 | 0.5:1 | LiAlCl₃O | 2.1*10⁻⁴ |
| Example 5 | 0.55:1 | Li_{1.1}AlCl₃O_{1.1} | 3.77*10⁻⁴ |
| Example 6 | 0.6:1 | Li_{1.2}AlCl₃O_{1.2} | 3.24*10⁻⁴ |
| Example 7 | 0.65:1 | Li_{1.3}AlCl₃O_{1.3} | 1.56*10⁻⁴ |
| Example 8 | 0.7:1 | Li_{1.4}AlCl₃O_{1.4} | 6.2*10⁻⁵ |
| Example 9 | 0.75:1 | Li_{1.5}AlCl₃O_{1.5} | 5.39*10⁻⁵ |
| Example 10 | 0.8:1 | Li_{1.6}AlCl₃O_{1.6} | 1.37*10⁻⁵ |

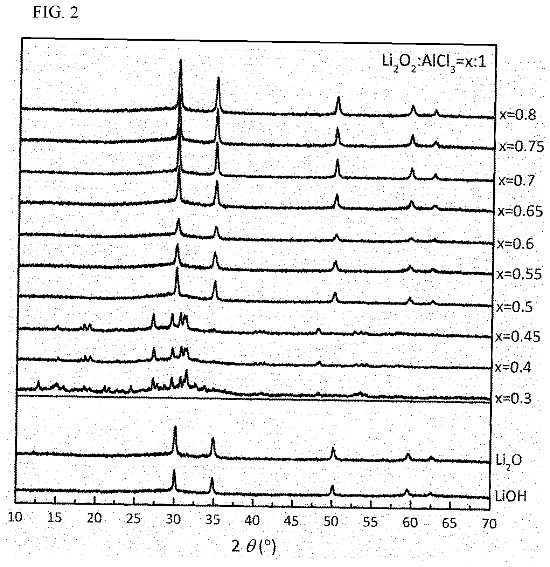

Referring to Table 2 above and FIG. 2, Example 5 exhibited higher ion conductivity of the solid electrolyte than Comparative Examples 1, 3, and 4.

### [Experimental Example 2: Analysis of phase of solid electrolyte]

FIG. 2 shows results of X-ray diffraction (XRD) analysis of LiOH, Li₂O, and solid electrolytes according to Examples 1 to 10.

Referring to FIG. 2, it has been confirmed that the solid electrolytes of Examples 4 to 10 had a phase consisting of LiCl and an amorphous. Here, the LiCl may serve as a space-charge layer, and at the same time, may not block a path of ion conduction. The amorphous serve to increase ion conductivity of the solid electrolytes.

### [Preparation Example 3: Preparation of all-solid-state battery including double solid electrolytes]

An all-solid-state battery of Example 5-1 including double solid electrolytes was prepared by using a positive electrode including a positive electrode active material (LiNi_{0.6}Co_{0.2}Mn_{0.2}O₂, NCM622) as a positive electrode, the solid electrolyte of Example 5, which was prepared using a precursor having a molar ratio of Li₂O₂:AlCl₃ of 0.55:1, as a solid electrolyte of the positive electrode only, a Li-In alloy as a negative electrode, argyrodite Li₆PS₅Cl as a solid electrolyte of the negative electrode, and Steel Use Stainless (SUS) as a current collector.

### [Preparation Example 4: Preparation of all-solid-state battery including single solid electrolyte]

An all-solid-state battery of Example 5-2 including a single solid electrolyte was prepared, wherein the all-solid-state battery was prepared in the same manner as in Preparation Example 3, except that the solid electrolyte of Example 5, which was prepared using a precursor having a molar ratio of Li₂O₂:AlCl₃ of 0.55:1 was used without differentiating between the positive electrode and negative electrode electrolytes.

### [Experimental Example 3: Evaluation of lifespan performance of all-solid-state battery]

Charge/discharge was performed on each of the all-solid-state batteries according to Preparation Examples 3 and 4 in a band of 3.0 V to 4.3 V compared to Li, and at this time, the current density was controlled to 18 mA/g to evaluate lifespan performance.

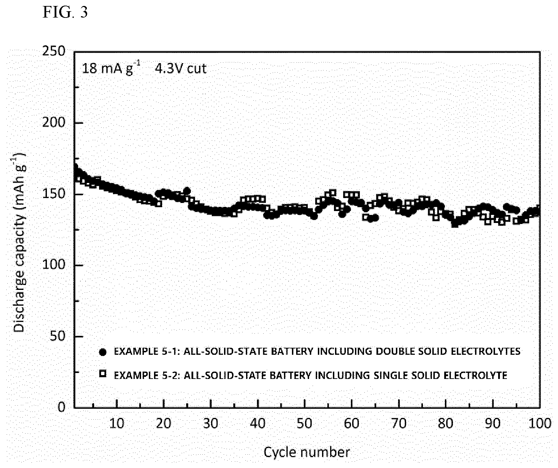

FIG. 3 is a graph showing a discharge capacity according to the number of cycles of each all-solid-state battery according to Preparation Examples 3 and 4.

Referring to FIG. 3, it has been confirmed that the all-solid-state batteries according to Preparation Examples 3 and 4 both have excellent lifespan properties and are capable of being charged and discharged stably. Specifically, it has been confirmed that the solid-state batteries according to Preparation Examples 3 and 4 maintain the discharge capacity well without significant degradation even if the number of cycles increases.

### [Experimental Example 4: Evaluation of linear sweep voltammetry]

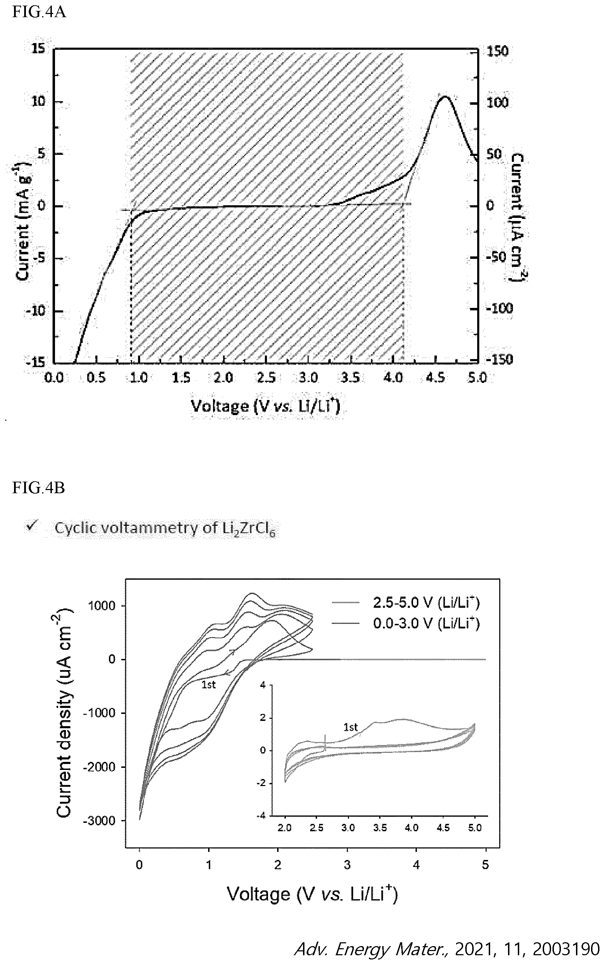

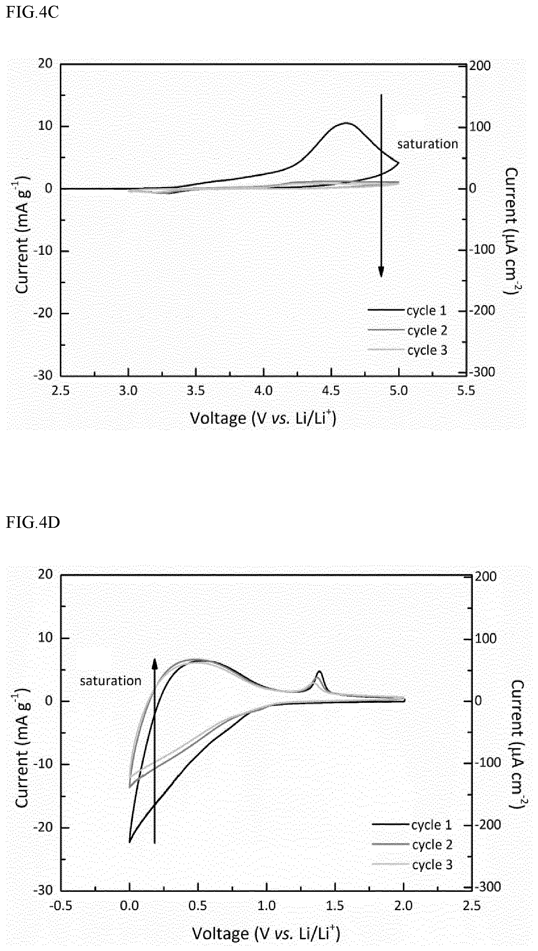

FIG. 4A is a graph showing a current according to a change in the voltage applied to an electrolyte of Example 5. FIG. 4B shows a cyclic voltammetry graph of Li₂ZrCl₆ (Ref). Here, the Ref is "Kwak, Hiram, et al. "New cost-effective halide solid electrolytes for all-solid-state batteries: mechanochemically prepared Fe3+-substituted Li2ZrCl6." Advanced Energy Materials 11.12 (2021): 2003190." FIG. 4C shows an oxidation current according to a voltage applied when the number of cycles of an all-solid-state battery according to Example 5-2 is changed. FIG. 4D shows a reduction current according to a voltage applied when the number of cycles of the all-solid-state battery according to Example 5-2 is changed.

Referring to FIGS. 4A to 4B, it has been confirmed that the electrolyte of Example 5 implements high oxidation stability with the introduction of Cl anions into the structure and high reduction stability with the introduction of oxygen anions thereinto. Accordingly, it has been confirmed that the electrolyte of Example 5 stably maintains the phase in a wide voltage band of 0.9 V to 4.4 V compared to Li. This means that the electrolyte is a much more stable electrolyte in a wide voltage range compared to LiAlCl₄, which has a potential window of 1.54 V to 4.4 V, or Li₆PS₅Cl, which has a potential window of 1.71 V to 2.01 V, compared to Li.

### [Experimental Example 5: Evaluation of electrochemical performance of all-solid-state battery]

Charge/discharge was performed on each of the all-solid-state batteries according to Preparation Examples 3 and 4 at a current of 18 mA/g and a band of 3.0 V to 4.3 V.

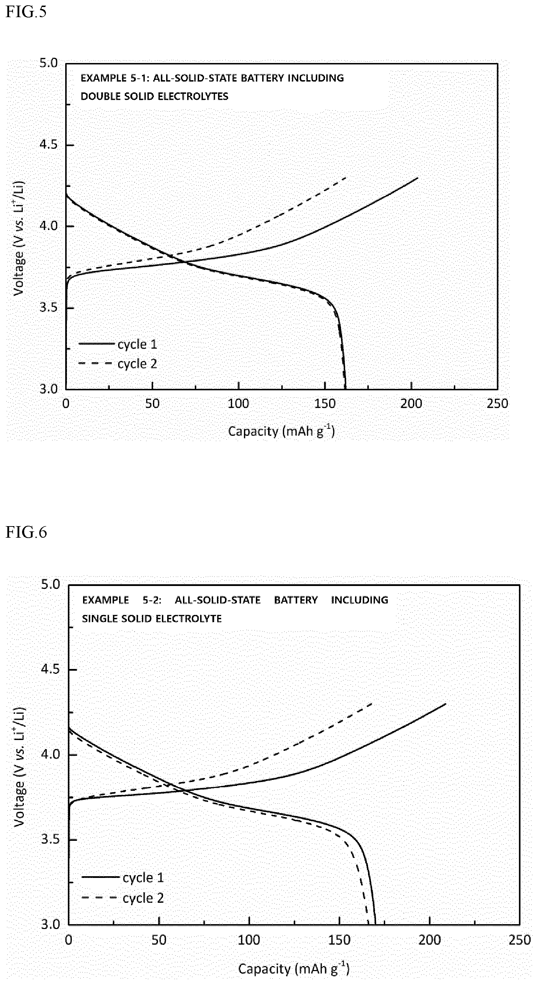

FIG. 5 is a charge/discharge graph according to a change in the number of cycles of an all-solid-state battery according to Preparation Example 3. FIG. 6 is a charge/discharge graph according to a change in the number of cycles of an all-solid-state battery according to Preparation Example 4.

Referring to FIGS. 5 and 6, it has been confirmed that the all-solid-state batteries according to Preparation Examples 3 and 4 have excellent electrochemical stability even if the number of cycles increases.

According to an aspect of the present invention, a solid electrolyte implementing high ion conductivity, and having high oxidation stability and reduction stability may be implemented.

According to another aspect of the present invention, an all-solid-state battery having excellent lifespan properties and electrochemical stability may be implemented.

In addition to the above-described effects, specific effects of the present invention will be described together while explaining the specific details for carrying out the invention below. In addition, effects of the present invention are not limited to the effects mentioned above, and may be easily implemented by means described herein and combinations thereof.

The features described in the above-described one embodiment may be combined with other embodiments, unless explicitly stated otherwise. In addition, although preferred embodiments of the present invention have been described in detail above, the scope of the present invention is not limited thereto, and various modifications and improvements by those skilled in the art using the basic concept of the present invention as defined in the following claims also fall within the scope of the present invention.

### [Description of the Reference Numerals or Symbols]

10: Positive electrode
30: Negative electrode
50: Solid electrolyte
100: All-solid-state battery

## Claims

1. A solid electrolyte represented by General Formula 1 below:
[General Formula 1] LiₐM_{b}X₃O_{c}
wherein in General Formula 1 above,
M is a metal element having an oxidation number of +3,
X is a halogen element, and
0<a≤2, 0<b≤1, and 0<c≤2.

2. The solid electrolyte of claim 1, wherein in General Formula 1 above, M is one selected from the group consisting of Al, Ga, Y, La, and Ac.

3. The solid electrolyte of claim 1, wherein in General Formula 1 above, M comprises Al.

4. The solid electrolyte of claim 1, wherein in General Formula 1 above, the halogen element is F, Cl, or Br.

5. The solid electrolyte of claim 1, wherein in General Formula 1 above, a and c are the same, or a=2c.

6. A method for preparing a solid electrolyte, the method comprising (S1) mixing and reacting lithium oxide and MX₃ to synthesize a solid electrolyte represented by General Formula 1 below:
[General Formula 1] LiₐM_{b}X₃O_{c}
wherein in General Formula 1 above,
M is a metal element having an oxidation number of +3,
X is a halogen element, and
0<a≤2, 0<b≤1, and 0<c≤2.

7. The method of claim 6, wherein the reaction is performed in an organic solvent or by solid-phase mixing.

8. The method of claim 6, wherein the mixing is performed at 400 rpm to 600 rpm for more than 0 hour to 72 hours or less.

9. An all-solid-state battery comprising:
a positive electrode;
a negative electrode; and
a solid electrolyte according to claim 1 interposed between the positive electrode and the negative electrode.

10. The all-solid-state battery of claim 9, wherein the solid electrolyte comprises:
a first layer in contact with the positive electrode; and
a second layer in contact with the negative electrode,
wherein at least one of the first layer and the second layer includes the solid electrolyte.
